(19) Europäisches Patentamt | European Patent Office | Office européen des brevets

(11) **EP 4 086 794 B1**

(12) **EUROPEAN PATENT SPECIFICATION**

(45) Date of publication and mention
of the grant of the patent:
**08.05.2024 Bulletin 2024/19**

(21) Application number: **22168635.5**

(22) Date of filing: **15.04.2022**

(51) International Patent Classification (IPC):
*G06F 21/55* (2013.01)    *H04L 9/40* (2022.01)

(52) Cooperative Patent Classification (CPC):
**H04L 63/1441; G06F 21/554; H04L 63/1425**

(54) **METHOD AND RELATIVE IMPLEMENTATION THROUGH AN ELECTRONIC DEVICE FOR THE ANALYSIS OF THE FLOW OF DATA PRESENT WITHIN AN IOT SYSTEM FOR A PRECISE DOMAIN OF INTEREST FOR PROBABILISTIC EVENT IDENTIFICATION**

VERFAHREN UND ZUGEHÖRIGE IMPLEMENTIERUNG DURCH EINE ELEKTRONISCHE VORRICHTUNG ZUR ANALYSE DES DATENFLUSSES INNERHALB EINES IOT-SYSTEMS FÜR EINEN PRÄZISEN INTERESSENSBEREICH ZUR PROBALISTISCHEN EREIGNISIDENTIFIKATION

PROCÉDÉ ET MISE EN OEUVRE ASSOCIÉE PAR L'INTERMÉDIAIRE D'UN DISPOSITIF ÉLECTRONIQUE D'ANALYSE DU FLUX DE DONNÉES PRÉSENT DANS UN SYSTÈME IOT POUR UN DOMAINE D'INTÉRÊT PRÉCIS POUR L'IDENTIFICATION D'ÉVÉNEMENTS PROBABILISTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **15.04.2021 IT 202100009548**

(43) Date of publication of application:
**09.11.2022 Bulletin 2022/45**

(73) Proprietor: **Minervas S.r.l.**
**84084 Fisciano (SA) (IT)**

(72) Inventors:
• **PASCALE, Francesco**
**84025 EBOLI (SA) (IT)**
• **ADINOLFI, Ennio, Andrea**
**84013 CAVA DE' TIRRENI (SA) (IT)**
• **COPPOLA, Simone**
**84091 BATTIPAGLIA (SA) (IT)**
• **SANTONICOLA, Emanuele**
**84014 NOCERA INFERIORE (SA) (IT)**

(74) Representative: **Marchioro, Paolo**
**Studio Bonini S.r.l.**
**Corso Fogazzaro, 8**
**36100 Vicenza (IT)**

(56) References cited:
**WO-A1-2018/052446    US-A1- 2014 337 974**
**US-A1- 2019 332 769**

## Description

The present invention relates to a method implemented by electronic computer for analysing data traffic within a computer network of an Internet of Things (IoT) system in a precise domain of interest, in order to identify the occurrence of one or more events in said domain, in particular abnormal events.

The invention also relates to an electronic system configured to implement the above method of the invention.

In this context, the term *"domain"* refers to the set of digital or physical entities connected to a computer network in a specific field of application, as well as the set of rules governing the relationships between such digital or physical entities in that field of application.

Document WO2018/052446 discloses a method for monitoring computers using external sensors in order to identify malware attacks. The sensor output is analyzed with different types of Neural Networks and a decision taken using a formal ontology.

It is well known that IoT is a paradigm in which the virtual world of information technology and of telecommunications is closely integrated with the real world of things. The explosion of this paradigm in recent years has had a huge impact on the world of research and industry. Today we are witnessing a real technological and cultural revolution where "objects", made smart and able to understand the world through a series of sensors, are able to interact with each other and to provide a series of solutions that were unthinkable just a few years ago. These objects are a set of all interconnected computer devices that gather and exchange data. IoT has been identified as one of the emerging technologies in IT and it interconnects and integrates a large number of digital and physical entities thanks to the capacity of appropriate information and communication technologies to enable the realisation of useful and previously unexplored services and applications. Originally, each object was identified by radio frequency transponders, or by barcodes or two-dimensional codes imprinted on the objects. Today, these objects are real nodes in the Internet network with more powerful computing capabilities than in the past. In fact, we can see a transformation of the IoT paradigm that from Fog Computing is slowly transforming into Edge Computing, where part of the processing is delegated to the nodes of the network instead of concentrating it all only in some parts of the IoT architecture. All these developments have made the whole IoT world very attractive for new frontiers and solutions. IoT applications, in fact, are diverse and implemented in different sectors: healthcare, mobile applications, transport, smart cities, smart homes, energy management and many others.

However, in general, such IoT implementations, in addition to allowing the introduction of new services, disadvantageously increase the probability of the occurrence of abnormal events due to either malfunctions in communication systems, or incorrect behaviours of the users of IoT devices, or, even more serious, to external cyber-attacks.

In other words, the IoT implementation in classical systems generally has the disadvantage of increasing the possible risks and vulnerabilities of the same systems.

One case in point, the automotive sector is one of the most interesting applications for the IoT. Today, vehicles are connected to the Internet and are considered a smart IoT object, thanks to the ability to send and receive data from the network. However, one of the biggest challenges in the automotive sector today is making the vehicle safe and reliable. Just think of all the electronic tools connected to a vehicle such as infotainment systems and/or data interchange systems, accessible from the outside via internet or, in general, wireless connections. Connected vehicles, in fact, show many vulnerabilities and in some cases do not comply with the policies defined in the CIA Model (confidentiality, integrity and availability).

In particular, one of the most significant problems in vehicle cybersecurity is that the various electronic control units (ECUs) of a vehicle are connected to each other, with sensors and with different electronic devices, through an internal network, and any hackers could access the aforesaid ECUs, through, for example, a vulnerability in the Bluetooth or infotainment system.

In this way, disadvantageously, such malicious persons could control the safety-critical ECUs and could sabotage devices that are essential for the correct and safe operation of the vehicle, such as, for example, the brakes.

On the other hand, the advantages related to connected vehicles are very useful to implement new innovative scenarios by providing, for example, context and situational awareness in certain operational scenarios.

Thus, disadvantageously, the vulnerability of such IoT systems, especially to cyber-attacks, demonstrates the real need for structures capable of countering such highly risky events.

Nowadays, there are many ways to counter cyber-attacks: encryption, secure access techniques or policies, certified intrusion detection systems and secure protocols are some good solutions. However, while these techniques and these protocols have proved to be effective in classic Internet-connected devices, they have disadvantageously presented numerous problems in their use in IoT devices. One of them is the limited computing capacity of microcontrollers or smart sensors used in IoT implementations. In this scenario, it is not possible to apply classical security techniques to the IoT, but it is necessary to understand how to integrate security without affecting the performance and the resources of the objects.

The present invention aims to overcome all the limitations and drawbacks indicated.

In particular, aim of the invention is to propose a method implemented by electronic computer capable of identifying abnormal events in data traffic within a computer network of an IoT system, in a precise domain of interest.

Even more in detail, aim of the invention is to propose the aforesaid method that allows identifying such abnormal events in real time, so that the occurrence of such events can be countered without serious consequences in the IoT system.

Further, aim of the invention is to propose a method that allows identifying possible cyber-attacks in such IoT systems, which could lead to serious consequences for the IoT system itself and for the users of such IoT system. This latter aim to be achieved is crucial, in particular, in the automotive sector, where a cyber-attack could compromise the functionalities of the vehicle and cause serious consequences to the individuals on board the aforesaid vehicle. The aforesaid purposes, together with the advantages that will be mentioned later, will be highlighted during the description of a preferred embodiment of the invention, which is given by way of non-limiting example with reference to the accompanying drawings, where:

- Fig. 1 schematically represents the logical architecture of the method of the invention;

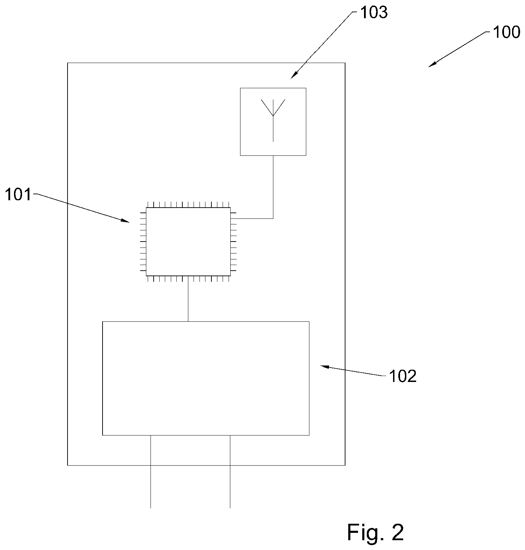

- Fig. 2 schematically represents an electronic system configured to implement the method of the invention of Fig. 1.

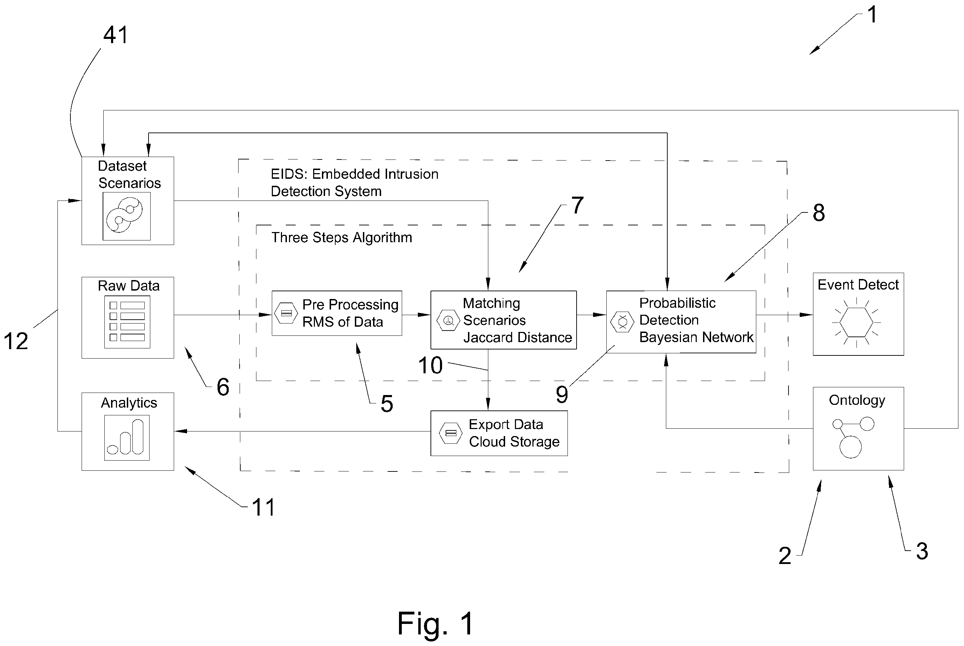

The method implemented by electronic computer of the invention, for analysing data traffic within a computer network of an IoT system in a precise domain of interest, is schematically represented by the logical architecture of Fig. 1, where it is indicated overall with **1.**

This method **1** of the invention aims at identifying the occurrence of one or more events, in particular abnormal events, in the aforesaid domain of interest. According to a non-limiting example embodiment of the method **1** of the invention, the domain of interest could be related to automotive and connected vehicles of the new generation, thus understood as IoT objects.

In this domain of interest, the events to be identified could be understood as abnormal events of malfunction of some electronic/mechanical devices of the motor vehicle, as inappropriate and dangerous behaviours and attitudes of the driver, or as cyber-attacks external to the computer network of the motor vehicle, through unauthorised interfacing, for example, with the Bluetooth or infotainment system of the vehicle itself.

It is not excluded, clearly, that the method of the invention can be applied to IoT systems belonging to other types of domains of interest, distinct from the automotive one.

Returning to the general aspects of the method **1** of the invention, prior to its execution, it is necessary to define a first data structure related to the ontology of the domain of interest, represented in Fig. 1 by the logical block indicated with **2,** and a second data structure related to the task ontology **3,** representing one or more possible scenarios in the aforesaid domain of interest.

In general, as is known in the IT sector and in the implementation of artificial intelligence, the term "ontology" is used to describe and define the parameters of interest related to the specific domain of interest, taking into account the digital or physical entities that belong in the specific case to the IoT system and are connected to the aforesaid computer network and also taking into account the relationships between these digital or physical entities in the domain of interest. This ontology is defined by means of a data structure containing all the aforesaid parameters defining the aforesaid digital or physical entities and their relationships in the domain of interest.

The computer programs can then use the ontology for a variety of purposes, including inductive reasoning, classification and various problem-solving techniques.

More in detail, therefore, the data structure related to the ontology of the domain of interest **2** makes it possible to be aware of the operational context in which one operates.

As regards, on the other hand, the data structure related to the task ontology **3,** it allows to define all the parameters related to the possible scenarios within the domain considered, where in each of these scenarios it is possible to predict the occurrence of one or more of the aforesaid events.

All this therefore makes it possible to define the parameters of interest, and therefore the data, involved in the domain of interest and in the various possible scenarios within the aforesaid domain.

"Parameters" in this context refer to the computer parameters that can be acquired by means of appropriate sensors, from each of the aforesaid digital or physical entities through the aforesaid computer network.

Taking again the previous example on the automotive, the data structure related to the ontology of the domain of interest **2** could comprise, in a structured way, all the parameters acquired by means of the sensors present in the motor vehicle and also, possibly, further parameters external to the vehicle, such as for example the driver's vital and motor parameters. While the data structure related to the task ontology **3** could, for example, predict all the parameters related to the set of possible and different scenarios in which the motor vehicle and its driver could find themselves while driving. For example, a possible scenario could be a driving condition on a straight road at a constant speed and in particular weather conditions.

Further, prior to the implementation of the method **1** of the invention, it is necessary to define a plurality of datasets **41,** each related to one of the possible scenarios, considered in the data structure related to the task ontology **3.** Each dataset **41** comprises a multiplicity of acquisitions of all values related to the parameters considered in the aforesaid specific scenario. At this point, the method **1** of the invention provides for performing a first step, indicated in Fig. 1 with **5,** which consists, first of all, of acquiring a plurality of data packages **6** of the data traffic coming from the computer network of the IoT system, in a given time interval.

Subsequently, the first step **5** provides for grouping these data packages based on the physical origin thereof.

In other words, these data packages **6** are grouped according to where they are physically picked up in the aforesaid computer network of the IoT system under consideration.

In the automotive example, this operation could provide for grouping together all the data packages **6** picked from each specific electronic control unit present in the motor vehicle.

Once this grouping has been carried out, the first step **5** provides, for each group of data packages **6,** for calculating the Root Mean Square (RMS) of each of the parameters, starting from the values of the same parameter present in the data packages **6** belonging to the aforesaid group, excluding the maximum value and the minimum value.

In particular, this calculation of the mean square value RMS is performed according to the following equation:

$$X_{RMS} = \sqrt{\frac{\sum_{i=1}^{i=N}[x_i^2] - \max(x)^2 - \min(x)^2}{N-2}}$$

where $x_i$ represents the value of the i-th parameter of each of the groups and N represents the number of data packages **6** of the aforesaid group comprising said i-th parameter and its value is established based on the time window considered for each processing.

Finally, the first step **5** of the method **1** of the invention provides, for each group, for normalising the mean square value RMS of each of the parameters considered with respect to the maximum value identified for the specific parameter.

Subsequently, the method **1** of the invention provides for performing a second step, indicated in Fig. 1 with **7,** which provides for comparing, for each of the groups considered, the mean square value RMS calculated for each of the various parameters of said group with the value of the same parameter of each of the datasets **41,** each related to one of the scenarios, so as to identify the most probable scenario.

According to the preferred embodiment of the invention, the above comparison step is implemented by means of the Jaccard similarity coefficient. More specifically, this Jaccard similarity coefficient is defined as:

$$J = \frac{\sum_i \min(xi, yi)}{\sum_i \max(xi, yi)}$$

where $x_i$ and $y_j$ represent respectively the i-th parameters of each group of the mean square values RMS and of each of the scenarios belonging to the task ontology.

The Jaccard similarity coefficient takes on values tending towards 1 the more similar the two sets considered are. Conversely, for very different sets, it takes on a value tending towards 0.

Therefore, using this Jaccard similarity coefficient, it is possible to select, among all the identified scenarios, the one that is most similar to the system condition represented by the mean square values RMS of the specific group considered of data packages **6.**

Therefore, once the most probable scenario has been identified, the method **1** of the invention envisages implementing a third step, indicated in Fig. 1 with **8,** which consists first of all in training a Bayesian network **9** by means of the values of the specific dataset **41** related to the most probable scenario identified by means of the second step **7,** wherein said Bayesian network **9** is preconstituted starting from the first data structure related to the ontology of the domain of interest **2** and from the second data structure related to the task ontology **3.**

Once this Bayesian network **9** has been trained, the aforesaid third step **8** provides for placing the normalised mean square values RMS, obtained for each group by means of the first step **5,** as input to this Bayesian network **9.** Advantageously, this approach, that is, the fact of using the Bayesian network **9** suitably trained with the specific dataset **41** of the most probable scenario, allows obtaining a probability index of presence or absence of a specific abnormal event with respect to the predetermined scenario identified in the second step **7.** In other words, it is possible to obtain a probability value that is more precise and contextualised to a specific context situation.

According to the preferred embodiment of the invention, the method **1** further provides for gathering and storing the data obtained with the comparison steps performed during the second step **7** in a data collection structure and for analysing such data, as indicated schematically in Fig. 1 by the arrow **10** and the logic block **11,** by means of an analysis methodology enabling the updating and correction of the datasets **41** of each of the scenarios and the structure and training of the Bayesian network **9,** as indicated schematically by the arrow **12** in the architecture **1** of Fig. 1.

According to a preferred, non-limiting embodiment, such a data collection structure is a Big Data structure and such an analysis methodology is a Big Data Analytics methodology.

In essence, advantageously, the method of the invention allows to implement a continuous learning of both the datasets **41** of the various scenarios, and of the Bayesian network **9.** According to the preferred non-limiting embodiment, such continuous learning is implemented by Machine Continuous Learning.

According to the preferred embodiment of the invention, such data collection and storage in a collection structure provides for also acquiring and storing data related to the plurality of data packages acquired during the first step **5,** so as to also analyse said data, together with the data obtained by the second step **7,** according to the aforesaid analysis methodology.

From a practical-implementation point of view, preferably but not necessarily, data collection and storage is implemented in a data collection system, which is distinct from the computer system in which the first step **5,** the second step **7** and the third step **8** of the method **1** of the invention are performed.

As mentioned above, according to the non-limiting implementation example related to the automotive domain, the above-mentioned abnormal events, among the various possibilities, could concern possible cyber-attacks of different nature. Furthermore, in this non-limiting implementation example, the aforesaid IoT system could be composed of the plurality of electronic control units present in a motor vehicle and the computer network could be constituted by the physical network for the connection among these electronic control units and by the CAN-Bus communication protocol, used to implement the communication between the same electronic control units.

As mentioned above, the electronic system **100** configured to implement the method for analysing data traffic within a computer network of an IoT system in a precise domain of interest according to what has been said so far is also part of the invention.

More specifically, according to the invention, said electronic system **100** comprises an electronic processing unit **101** configured to implement the first step **5,** the second step **7** and the third step **8** of the aforesaid method **1** of the invention.

Further, the electronic system **100** comprises a transceiver and controller device **102** which is configured to acquire the plurality of data packages **6** of data traffic coming from the computer network of the IoT system in which said electronic system **100** is used.

In relation to the implementation example presented above and related to the automotive domain, such a transceiver and controller device **102** could be a CAN type transceiver and controller device **102** in order to be able to read and/or write data on the CAN Bus of the motor vehicle, so as to be able to interact with the electronic control units present in the same motor vehicle.

Finally, the electronic system **100** also comprises a remote connection module **103,** preferably but not necessarily of the 2G/3G/4G/5G type, configured to implement the remote communication of the electronic system **100** with external devices.

On the basis of the foregoing, therefore, the method of the invention and the electronic system configured to carry out the aforesaid method achieve all the predetermined purposes.

In particular, the aim to propose a method implemented by electronic computer capable of identifying abnormal events in data traffic within a computer network of an IoT system, in a precise domain of interest is achieved.

Even more in detail, the aim to propose the aforesaid method that allows identifying such abnormal events in real time, so that the occurrence of such events can be countered without serious consequences in the IoT system is achieved.

Further, the aim to propose a method that allows identifying possible cyber-attacks in such IoT systems, which could lead to serious consequences for the IoT system itself and for the users of such IoT system is achieved.

This latter aim achieved is crucial, in particular, in the automotive sector, where a cyber-attack could compromise the functionalities of the vehicle and cause serious consequences to the individuals on board the aforesaid vehicle.

## Claims

1. Method (1) implemented by electronic computer for analysing data traffic within a computer network of an IoT system in a precise domain of interest, in order to identify the occurrence of one or more events, in particular abnormal events, in said domain, where said method, starting from:

   - a first data structure related to the ontology of said domain of interest (2), said ontology taking into account the digital or physical entities that belong to said IoT system and are connected to said computer network, and taking into account also the relationships between said digital or physical entities in said domain of interest, so as to define the parameters of interest belonging to said domain;
   - a second data structure related to the task ontology (3), said task ontology (3) taking into account one or more possible scenarios in said domain of interest, in each of said scenarios being possible to predict the occurrence of one or more of said events, so as to define the parameters of interest belonging to said scenarios;
   - a plurality of datasets (41), each related to one of said scenarios and comprising a plurality of values of said parameters belonging to said scenario; provides for the execution of:

      - a first step (5) comprising the operations of:

         - acquiring a plurality of data packages (6) of the data traffic coming from said computer network in a given time interval;
- grouping said data packages (6) into distinct groups based on the origin of said data packages (6);
- for each group, calculating the mean square value (RMS) of each of said parameters starting from the values of said parameter present in said data packages (6) belonging to said group, excluding the maximum value and the minimum value;
- for each group, normalising said mean square value (RMS) of each of said parameters relative to said maximum value;

- a second step (7) which provides for comparing, for each of said groups, the normalised mean square value (RMS) calculated for each of said parameters of said group with the value of the same parameter of each of said datasets (41) so as to identify the most probable scenario belonging to said task ontology (3), said comparison being implemented by means of the Jaccard similarity coefficient;
- a third step (8) providing for:

- training, by means of the values of the parameters present in the dataset (41) related to the most probable scenario identified by said second step (7), a Bayesian network (9) pre-constituted starting from said domain ontology of interest (2) and from said task ontology (3);
- placing said normalised mean square values (RMS), obtained for each of said groups by said first step (5), as input to said trained Bayesian network (9), said trained Bayesian network (9) providing as output a probability index of the occurrence of one of said events, in particular of one of said abnormal events, for each of said groups, with respect to said scenario identified in said second step (7).

2. Method (1) according to the preceding claim, wherein
it provides to gather and store data obtained by said comparisons during said second step (7) in a data collection structure and to analyse said data according to an analysis methodology (11) so as to update and correct the datasets (41) of each of said scenarios and the structure and training of said Bayesian network (9).

3. Method (1) according to the preceding claim, wherein
said gathering and said storing said data in said data collection structure provide to gather and store also the data relative to said plurality of data package (6) acquired during said first step (5), so as to analyse also said data according to said analysis methodology (11).

4. Method (1) according to any one of claims 2 or 3, wherein
said gathering and said storing of said data are implemented in a computer system distinct from the electronic system (100) wherein said first step (5), said second step (7) and said third step (8) are performed.

5. Method (1) according to any one of the preceding claims, wherein said Jaccard similarity coefficient is defined as:

$$J = \frac{\sum_i \min(xi, yi)}{\sum_i \max(xi, yi)}$$

where $x_i$ and $y_i$ represent respectively the i-th parameters of each of said groups of normalised mean square values (RMS) and the parameters of each of said scenarios belonging to said task ontology (3).

6. Method (1) according to any one of the preceding claims,
wherein said operation of calculating the mean square value (RMS) during said first step (5) is performed according to the following equation:

$$X_{RMS} = \sqrt{\frac{\sum_{i=1}^{i=N}[x_i^2] - \max(x)^2 - \min(x)^2}{N-2}}$$

where $x_i$ represents the value of the i-th parameter of each of said groups and N represents the number of data packages (6) of said group comprising said i-th parameter.

7. Method (1) according to any one of the preceding claims, wherein said events in said domain correspond to cyber-attacks.

8. Method (1) according to any one of the preceding claims, wherein said domain of interest is the domain of the automotive, said IoT system comprises the plurality of electronic control units present in a motor vehicle and said computer network corresponds to the physical network for the connection among said electronic control units and to the CAN-Bus communication protocol used to implement communication between said electronic control units.

9. Electronic system (100), which is configured to implement the method (1) for analysing data traffic within a computer network of an IoT system in a precise domain of interest, according to any one of the preceding claims, said electronic system (100) comprising:

- an electronic processing unit (101) configured to implement said first step (5), said second step (7) and said third step (8) of said method (1) according to claim 1;
- a transceiver and controller device (102) configured to allow, by said electronic processing unit (101), to acquire said plurality of data packages (6) of the data traffic coming from said computer network of said IoT system.

10. Electronic system (100) according to claim 9, wherein it comprises a remote connection module (103) configured to implement the remote communication of said electronic system (100) with external devices.

**Patentansprüche**

1. Verfahren (1), das von einem elektronischen Computer implementiert wird, um den Datenverkehr innerhalb eines Computernetzwerks eines IoT-Systems in einem präzisen Interessensbereich zu analysieren, um das Auftreten eines oder mehrerer Ereignisse, insbesondere anormaler Ereignisse, in diesem Bereich zu identifizieren, wobei das Verfahren, ausgehend von:

- einer ersten Datenstruktur, die sich auf die Ontologie des Interessensbereichs (2) bezieht, wobei die Ontologie die digitalen oder physischen Einheiten berücksichtigt, die zu dem IoT-System gehören und mit dem Computernetzwerk verbunden sind, und auch die Beziehungen zwischen den digitalen oder physischen Einheiten in dem Interessensbereich berücksichtigt, um die Interessensparameter zu definieren, die zu dem Bereich gehören;
- einer zweiten Datenstruktur, die sich auf die Aufgabenontologie (3) bezieht, wobei die Aufgabenontologie (3) ein oder mehrere mögliche Szenarien in dem Interessensbereich berücksichtigt, wobei es in jedem der Szenarien möglich ist, das Auftreten eines oder mehrerer der Ereignisse vorherzusagen, um die zu den Szenarien gehörenden Interessensparameter zu definieren;
- einer Vielzahl von Datensätzen (41), die sich jeweils auf eines der Szenarien beziehen und eine Vielzahl von Werten der zu dem Szenario gehörenden Parameter umfassen;

die Ausführung von Folgendem vorsieht:

- eines ersten Schrittes (5), der die folgenden Vorgänge umfasst:

- Erfassen einer Vielzahl von Datenpaketen (6) des vom Computernetzwerk kommenden Datenverkehrs in einem bestimmten Zeitintervall;
- Gruppieren der Datenpakete (6) in verschiedene Gruppen basierend auf der Herkunft der Datenpakete (6);
- Berechnen, für jede Gruppe, des quadratischen Mittelwertes (RMS) jedes der Parameter ausgehend von den Parameterwerten, die in den zur Gruppe gehörenden Datenpaketen (6) vorhanden sind, unter Ausschluss des Maximalwertes und des Minimalwertes;
- Normalisieren, für jede Gruppe, des quadratischen Mittelwertes (RMS) jedes der Parameter in Bezug auf den Maximalwert;

- eines zweiten Schrittes (7), der vorsieht, für jede der Gruppen den normalisierten quadratischen Mittelwert (RMS), der für jeden der Parameter der Gruppe berechnet wurde, mit dem Wert desselben Parameters jeder der Datensätze (41) zu vergleichen, um das wahrscheinlichste Szenario zu identifizieren, das zu der Aufgabenontologie (3) gehört, wobei der Vergleich mit Hilfe des Jaccard-Ähnlichkeitskoeffizienten implementiert wird;
- eines dritten Schrittes (8), der Folgendes vorsieht:

- Trainieren eines Bayes'schen Netzwerks (9), das ausgehend von der Interessensbereichsontologie (2) und der Aufgabenontologie (3) vorkonstituiert wurde, mit Hilfe der im Datensatz (41) vorhandenen Parameterwerte, die sich auf das durch den zweiten Schritt (7) identifizierte wahrscheinlichste Szenario beziehen;
- Platzieren der normalisierten quadratischen Mittelwerte (RMS), die für jede der Gruppen durch den ersten Schritt (5) erhalten wurden, als Eingabe in das trainierte Bayes'sche Netzwerk (9), wobei das trainierte Bayes'sche Netzwerk (9) als Ausgabe einen Wahrscheinlichkeitsindex des Auftretens eines der Ereignisse, insbesondere eines der anormalen Ereignisse, für jede der Gruppen in Bezug auf das im zweiten Schritt (7) identifizierte Szenario liefert.

2. Verfahren (1) nach dem vorstehenden Anspruch, wobei es vorsieht, die durch die Vergleiche während des zweiten Schritts (7) erhaltenen Daten in einer Datensammelstruktur zu sammeln und zu speichern und die Daten gemäß einer Analysemethodik (11) zu analysieren, um die Datensätze (41) jedes der Szenarien und die Struktur und das Training des Bayes'schen Netzwerks (9) zu aktualisieren und zu korrigieren.

3. Verfahren (1) nach dem vorstehenden Anspruch, wobei das Sammeln und das Speichern der Daten in der Datensammelstruktur dafür sorgen, dass auch die Daten bezüglich der Vielzahl von Datenpaketen (6), die während des ersten Schrittes (5) erfasst wurden, gesammelt und gespeichert werden, um auch die Daten gemäß der Analysemethodik (11) zu analysieren.

4. Verfahren (1) nach einem der Ansprüche 2 oder 3, wobei das Sammeln und das Speichern der Daten in einem Computersystem implementiert werden, das sich von dem elektronischen System (100) unterscheidet, in dem der erste Schritt (5), der zweite Schritt (7) und der dritte Schritt (8) durchgeführt werden.

5. Verfahren (1) nach einem der vorstehenden Ansprüche, wobei der Jaccard-Ähnlichkeitskoeffizient definiert ist als:

$$J = \frac{\sum_i \min(xi, yi)}{\sum_i \max(xi, yi)}$$

wobei $x_i$ und $y_i$ jeweils die i-ten Parameter jeder der Gruppen normalisierter quadratischer Mittelwerte (RMS) und die Parameter jedes der Szenarien darstellen, die zu der Aufgabenontologie (3) gehören.

6. Verfahren (1) nach einem der vorstehenden Ansprüche, wobei der Vorgang des Berechnens des quadratischen Mittelwertes (RMS) während des ersten Schrittes (5) gemäß der folgenden Gleichung durchgeführt wird:

$$X_{RMS} = \sqrt{\frac{\sum_{i=1}^{i=N}[x_i^2] - \max(x)^2 - \min(x)^2}{N-2}}$$

wobei $x_i$ den Wert des i-ten Parameters jeder der Gruppen darstellt und N die Anzahl der Datenpakete (6) der Gruppe, die den i-ten Parameter umfasst, darstellt.

7. Verfahren (1) nach einem der vorstehenden Ansprüche, wobei die Ereignisse in dem Bereich Cyberangriffen entsprechen.

8. Verfahren (1) nach einem der vorstehenden Ansprüche, wobei der Interessensbereich der Automobilbereich ist, das IoT-System die Vielzahl der in einem Kraftfahrzeug vorhandenen elektronischen Steuereinheiten umfasst und das Computernetzwerk dem physischen Netzwerk für die Verbindung zwischen den elektronischen Steuereinheiten und dem CAN-Bus-Kommunikationsprotokoll entspricht, das zur Implementierung der Kommunikation zwischen den elektronischen Steuereinheiten verwendet wird.

9. Elektronisches System (100), das konfiguriert ist, um das Verfahren (1) zur Analyse des Datenverkehrs innerhalb eines Computernetzwerks eines IoT-Systems in einem präzisen Interessensbereich gemäß einem der vorstehenden Ansprüche zu implementieren, wobei das elektronische System (100) umfasst:

- eine elektronische Verarbeitungseinheit (101), die konfiguriert ist, um den ersten Schritt (5), den zweiten Schritt (7) und den dritten Schritt (8) des Verfahrens (1) nach Anspruch 1 zu implementieren;
- eine Transceiver- und Steuervorrichtung (102), die konfiguriert ist, um es der elektronischen Verarbeitungseinheit (101) zu ermöglichen, die Vielzahl von Datenpaketen (6) des Datenverkehrs zu erfassen, der von dem Computernetzwerk des IoT-Systems kommt.

10. Elektronisches System (100) nach Anspruch 9, wobei es ein Fernverbindungsmodul (103) umfasst, das konfiguriert ist, um die Fernkommunikation des elektronischen Systems (100) mit externen Vorrichtungen zu implementieren.

**Revendications**

1. Procédé (1) mis en oeuvre par un calculateur électronique pour analyser un trafic de données au sein d'un réseau informatique d'un système IoT dans un domaine d'intérêt précis, afin d'identifier l'occurrence d'un ou de plusieurs événements, en particulier d'événements anormaux, dans ledit domaine, où ledit procédé, à partir:

- d'une première structure de données liée à l'ontologie dudit domaine d'intérêt (2), ladite ontologie prenant en compte les entités numériques ou physiques qui appartiennent audit système IoT et sont connectées audit réseau informatique, et prenant également en compte les relations entre lesdites entités numériques ou physiques dans ledit domaine d'intérêt, de manière à définir les paramètres d'intérêt appartenant audit domaine;
- d'une deuxième structure de données liée à l'ontologie de tâches (3), ladite ontologie de tâches (3) prenant en compte un ou plusieurs scénarios possibles dans ledit domaine d'intérêt, dans chacun desdits scénarios étant possible de prédire l'occurrence d'un ou plusieurs desdits événements, de manière à définir les paramètres d'intérêt appartenant auxdits scénarios;
- d'une pluralité d'ensembles de données (41), chacun lié à un desdits scénarios et comprenant une pluralité de valeurs desdits paramètres appartenant audit scénario;

comporte l'exécution:

- d'une première étape (5) comprenant les opérations suivantes:

- l'acquisition d'une pluralité de paquets de données (6) du trafic de données provenant dudit réseau informatique dans un intervalle de temps donné;
- le regroupement desdits paquets de données (6) en groupes distincts sur la base de l'origine desdits paquets de données (6);
- pour chaque groupe, le calcul de la valeur quadratique moyenne (RMS) de chacun desdits paramètres à partir des valeurs dudit paramètre présentes dans lesdits paquets de données (6) appartenant audit groupe, à l'exclusion de la valeur maximale et de la valeur minimale;
- pour chaque groupe, la normalisation de ladite valeur quadratique moyenne (RMS) de chacun desdits paramètres par rapport à ladite valeur maximale;

- d'une deuxième étape (7) qui comporte la comparaison, pour chacun desdits groupes, de la valeur quadratique moyenne (RMS) normalisée calculée pour chacun desdits paramètres dudit groupe avec la valeur du même paramètre de chacun desdits ensembles de données (41) afin d'identifier le scénario le plus probable appartenant à ladite ontologie de tâches (3), cette comparaison étant mise en oeuvre au moyen du coefficient de similitude de Jaccard;
- d'une troisième étape (8) comportant:

- la formation, au moyen des valeurs des paramètres présents dans l'ensemble de données (41) lié au scénario le plus probable identifié par ladite deuxième étape (7), d'un réseau bayésien (9) pré-constitué à partir de ladite ontologie de domaine d'intérêt (2) et de ladite ontologie de tâches (3);
- la mise en place desdites valeurs quadratiques moyennes (RMS) normalisées, obtenues pour chacun desdits groupes par ladite première étape (5), en tant qu'entrée dudit réseau bayésien formé (9), ledit réseau bayésien formé (9) fournissant en sortie un indice de probabilité de l'occurrence d'un desdits événements, en particulier d'un desdits événements anormaux, pour chacun desdits groupes, par rapport audit scénario identifié dans ladite deuxième étape (7).

2. Procédé (1) selon la revendication précédente, dans lequel il comporte le rassemblement et le stockage de données obtenues par lesdites comparaisons au cours de ladite deuxième étape (7) dans une structure de collecte de données et l'analyse desdites données selon une méthodologie d'analyse (11) de manière à mettre à jour et corriger les ensembles de données (41) de chacun desdits scénarios ainsi que la structure et la formation dudit réseau bayésien (9).

3. Procédé (1) selon la revendication précédente, dans lequel ledit rassemblement et ledit stockage desdites données dans ladite structure de collecte de données comportent le rassemblement et le stockage également des données relatives à ladite pluralité de paquets de données (6) acquis au cours de ladite première étape (5), afin d'analyser également lesdites données selon ladite méthodologie d'analyse (11).

4. Procédé (1) selon l'une quelconque des revendications 2 ou 3, dans lequel ledit rassemblement et ledit stockage desdites données sont mis en oeuvre dans un système informatique distinct du système électronique (100) dans lequel sont réalisées ladite première étape (5), ladite deuxième étape (7) et ladite troisième étape (8).

5. Procédé (1) selon l'une quelconque des revendications précédentes, dans lequel ledit coefficient de similitude de Jaccard est défini comme suit:

$$= \frac{\sum_i \min(xi, yi)}{\sum_i \max(xi, yi)}$$

où $x_i$ et $y_j$ représentent respectivement les i-èmes paramètres de chacun desdits groupes de valeurs quadratiques moyennes (RMS) normalisées et les paramètres de chacun desdits scénarios appartenant à ladite ontologie de tâches (3).

6. Procédé (1) selon l'une quelconque des revendications précédentes, dans lequel ladite opération de calcul de la valeur quadratique moyenne (RMS) au cours de ladite première étape (5) est réalisée selon l'équation suivante:

$$X_{RMS} = \sqrt{\frac{\sum_{i=1}^{i=N}[x_i^2] - \max(x)^2 - \min(x)^2}{N-2}}$$

où $x_i$ représente la valeur du i-ème paramètre de chacun desdits groupes et N représente le nombre de paquets de données (6) dudit groupe comprenant ledit i-ème paramètre.

7. Procédé (1) selon l'une quelconque des revendications précédentes, dans lequel lesdits événements dans ledit domaine correspondent à des cyber-attaques.

8. Procédé (1) selon l'une quelconque des revendications précédentes, dans lequel ledit domaine d'intérêt est le domaine de l'automobile, ledit système IoT comprend la pluralité d'unités de contrôle électronique présentes dans un véhicule automobile et ledit réseau informatique correspond au réseau physique pour la connexion entre lesdites unités de contrôle électronique et au protocole de communication CAN-Bus utilisé pour mettre en oeuvre la communication entre lesdites unités de contrôle électronique.

9. Système électronique (100), qui est configuré pour mettre en oeuvre le procédé (1) d'analyse du trafic de données au sein d'un réseau informatique d'un système IoT dans un domaine d'intérêt précis, selon l'une quelconque des revendications précédentes, ledit système électronique (100) comprenant:

   - une unité de traitement électronique (101) configurée pour mettre en oeuvre ladite première étape (5), ladite deuxième étape (7) et ladite troisième étape (8) dudit procédé (1) selon la revendication 1;
   - un dispositif émetteur-récepteur et contrôleur (102) configuré pour permettre, par ladite unité de traitement électronique (101) l'acquisition de ladite pluralité de paquets de données (6) du trafic de données provenant dudit réseau informatique dudit système IoT.

10. Système électronique (100) selon la revendication 9, dans lequel il comprend un module de connexion à distance (103) configuré pour mettre en oeuvre la communication à distance dudit système électronique (100) avec des dispositifs externes.

Fig. 1

Fig. 2

**EP 4 086 794 B1**

**Patent documents cited in the description**

- WO 2018052446 A